(19) Europäisches Patentamt

European Patent Office

Office européen des brevets

(11) **EP 1 188 602 B1**

(12) **EUROPEAN PATENT SPECIFICATION**

(45) Date of publication and mention
of the grant of the patent:
**29.03.2006 Bulletin 2006/13**

(51) Int Cl.:
*B60W 10/06* (2006.01)     *B60W 10/10* (2006.01)

(21) Application number: **01122128.0**

(22) Date of filing: **14.09.2001**

(54) **Driving force control apparatus**

Antriebskraftsteuerungssystem

Système de commande de la force d'entraînement

(84) Designated Contracting States:
**DE FR GB**

(30) Priority: **18.09.2000 JP 2000281401**

(43) Date of publication of application:
**20.03.2002 Bulletin 2002/12**

(73) Proprietor: **NISSAN MOTOR COMPANY, LIMITED**
**Yokohama-shi,**
**Kanagawa 221-0023 (JP)**

(72) Inventors:
• **Iwano, Hiroshi**
**Yokosuka-shi,**
**Kanagawa 238-0034 (JP)**

• **Yasuoka, Masayuki**
**Yokohama-shi,**
**Kanagawa 236-0057 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 925 992          EP-A- 1 034 961**
**US-A- 5 790 968          US-A- 6 027 425**

**Description**

The present invention relates to a driving force control apparatus according to the preamble of independent claim 1.

Such driving force control apparatus is known from prior art document EP 0 925 992 A2.

Driving force control apparatus have been disclosed in Japanese Patent Provisional Publication Nos. 62-199536 (hereinafter is referred to as"JP62-199536"),2000-45811 (hereinafter is referred to as "JP2000-45811"), and 11-255002 (hereinafter is referred to as "JP11-255002") .

In a control method for a vehicle driving system disclosed in JP62-199536, a desired driving torque is determined depending upon a manipulated variable of an accelerator and vehicle speed. A desired transmission ratio and a desired engine torque value are computed based on the desired driving force to produce an optimal engine operating point for good fuel economy. JP2000-45811 teaches the compensation for a deviation of an actual driving force from a desired value (a desired driving force), arising from inertia torque occurring owing to a delay in shifting of an automatic transmission and a change in wheel speed. The deviation from the desired driving force is compensated for by correcting engine torque. In a driving force controller disclosed in JP11-255002 , when a change in a first factor of two factors, namely a transmission ratio and an engine torque output, is time-delayed as compared to a change in the second factor, in other words, when a time delay in a control system for the first factor is greater than a time delay in a control system for the second factor, an excess or deficiency of the driving force, occurring due to the time delay in the control system for the first factor, is compensated for by temporarily varying or adjusting the change in the second factor for the control system having a comparatively less time delay.

In each control specification of driving force control systems disclosed in the JP62-199536, JP2000-45811 and JP11-255002, the deviation from the desired driving force, arising from the inertia torque occurring owing to a delay in automatic transmission shifting and a rotational-speed change (such as a wheel-speed change), is compensated for by way of engine torque control. Thus, these control systems have the difficulty in accurately realizing the driver-required driving force. In presence of an excessive engine-torque requirement greater than an engine torque value at full throttle, it is difficult to realize a desired driving force. Also, the previously-discussed control systems do not take full account of realization of a transient torque value. In particular, depending on how a transient torque is produced during early stages of vehicle acceleration, there is a possibility of a lack in acceleration feeling and undesired noises/vibrations, that is, a deterioration in vehicle driveability.

Prior art document US 6,027,425 discloses a system for controlling motive force of a vehicle having an engine and a continuously variable automatic transmission connected to the engine to transmit engine torque to a drive shaft of the vehicle. I n the system, a desired motive force is calculated or determined from the detected accelerator (pedal) position and vehicle speed, and based on the determined motive force a desired engine speed, more specifically a drive shaft speed of the transmission, is calculated or determined. T hen inertia torque acting on the vehicle is calculated or determined based on at least the determined speed and detected speed, and a desired throttle opening is corrected by the determined inertia torque when the vehicle accelerates or decelerates. With the arrangement, the vehicle response delay due to the inertia torque is adjusted and hence, drivability and fuel economy performance are enhanced.

Prior art document EP 0 925 992 A discloses a drive train control system including an engine having various engine speeds and a torque control element operable in response to a first control signal to control engine torque. Said system comprises a CVT including a ratio control arrangement having an actuator activated in response to a second control signal to establish various speed ratios between input and output shafts of the CVT. A controller is provided for outputting the first and second control signals. Said controller includes a target ratio generator to generate a target ratio, an inertia torque generator to generate an inertia torque from the target ratio and a correction generator to generate a correction required to get engine torque change against the inertia torque. The controller generating the first control signal in response to the correction.

It is an objective of the present invention to provide a driving force control apparatus for an automotive vehicle, wherein a driver-required driving torque, desired vehicle driveability and engine power output is realized.

According to the present invention said objective is solved by driving force control apparatus for an automotive vehicle having the features of independent claim 1.

Preferred embodiments are laid down in the dependent claims.

Hereinafter, the present invention is illustrated and explained in greater detail by means of preferred embodiments in conjunction with the accompanying drawings. In the drawings wherein:

Fig. 1 is a system block diagram illustrating a first embodiment of a driving force control apparatus.

Fig. 2 is a flow chart showing steady-state desired values arithmetic-calculation routine executed within a control unit incorporated in the driving force control apparatus of the first embodiment.

Fig. 3 shows a predetermined desired driving force map based on hardware characteristics.

Fig. 4 shows a predetermined characteristic map needed to set a desired transmission ratio.

Fig. 5 is a flow chart showing transient-state desired values arithmetic-calculation routine executed within the control unit incorporated in the driving force control apparatus of the first embodiment.

Figs. 6A and 6B show a characteristic curve representative of a driving-force change pattern needed to realize an ideal acceleration rate owing to a rise in a manipulated variable of an accelerator.

Fig. 7 shows a look-up table (or a map) of the driving-force change pattern formulated for every vehicle speed V and for every accelerator manipulated variable Acc.

Fig. 8 shows a power train having an engine and a continuously variable automatic transmission (CVT).

Fig. 9 is a flow chart illustrating a routine needed to realize a desired engine torque and executed within the control unit incorporated in the driving force control apparatus of the first embodiment.

Fig. 10 shows a predetermined desired engine torque versus desired intake-air quantity characteristic map.

Fig. 11 shows a predetermined throttle opening Th/V map.

Fig. 12 is a time chart showing variations in the driving force, obtained in the conventional driving force control apparatus that the engine torque and the transmission ratio are controlled independently of each other.

Fig. 13 is a time chart showing variations in the driving force, obtained in the driving force control apparatus of the embodiment that the engine torque and the transmission ratio are tune-controlled.

Fig. 14 shows a predetermined map for both a time rate of change $\Delta Te$ in engine torque and a time rate of change $\Delta Gp$ in transmission ratio, preset for every vehicle speed V and for every accelerator manipulated variable Acc, and used within the control unit of the driving force control apparatus of the third embodiment.

## DESCRIPTION OF THE PREFERRED EMBODIMENTS

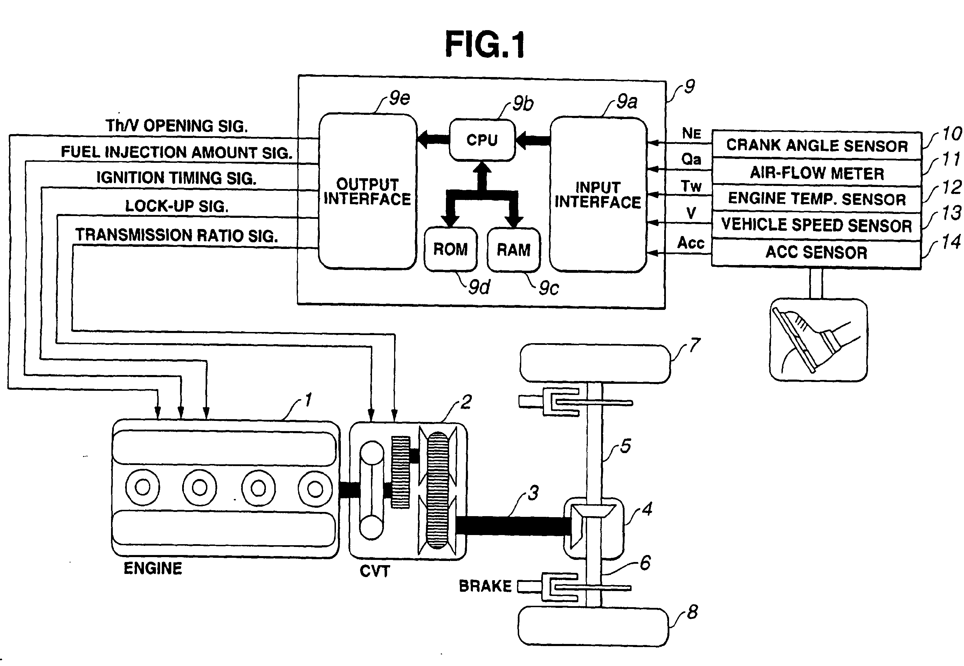

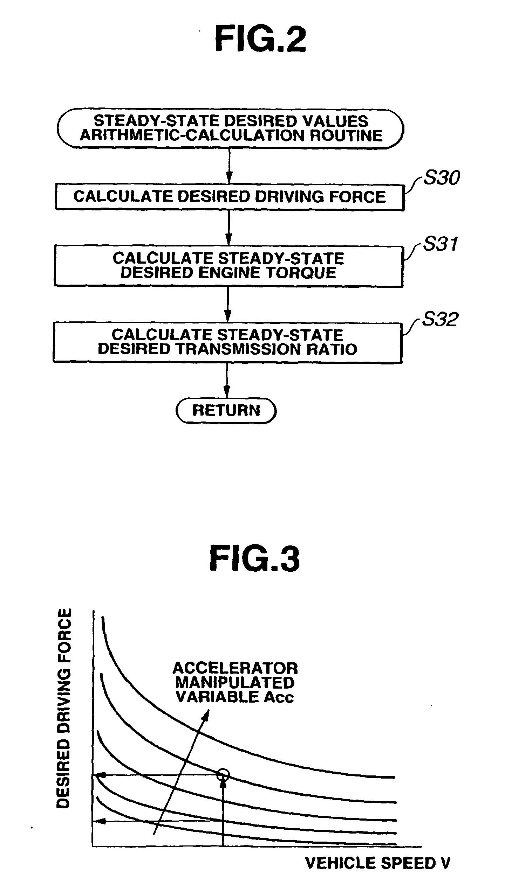

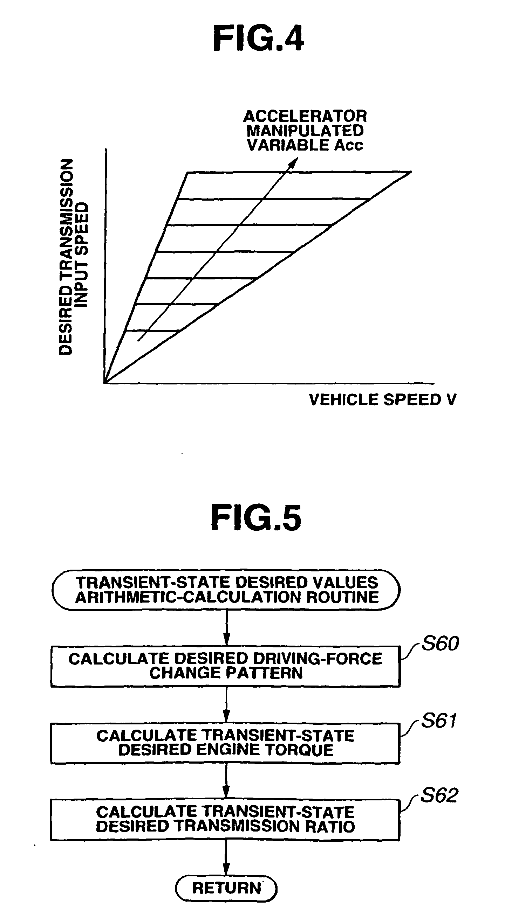

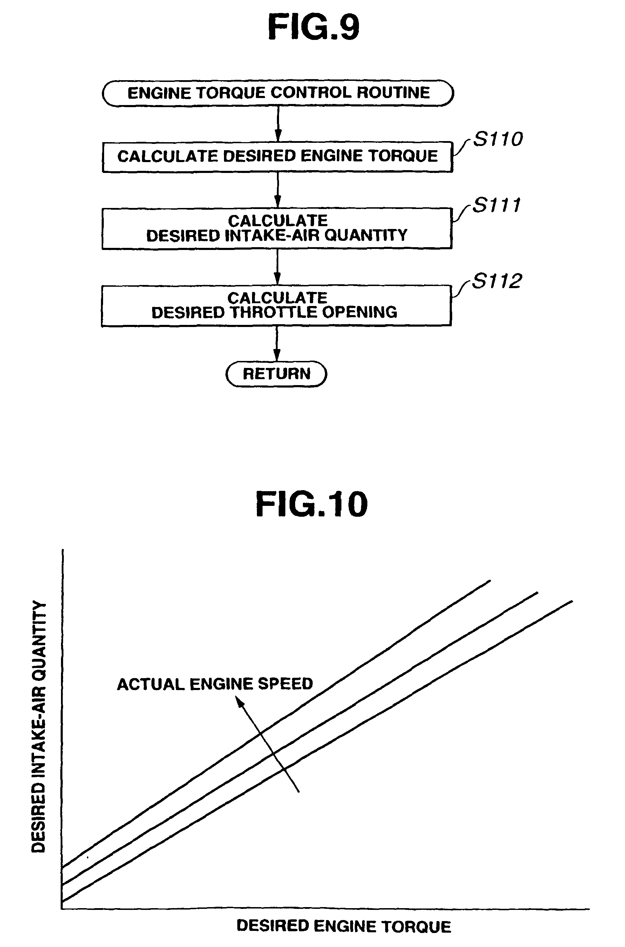

Referring now to the drawings, particularly to Fig. 1. the driving force control apparatus of the embodiment is exemplified in an automotive vehicle equipped with a power train having an internal combustion engine 1 and a continuously variable automatic transmission (often abbreviated to "CVT") 2 with a lock-up torque converter. Driving torque is transmitted from the power train through a propeller shaft 3, a rear differential 4, left and right axle driveshafts 5 and 6 to left and right rear drive wheels 7 and 8. Although it is not clearly shown in Fig. 1. engine 1 is equipped with a throttle actuator, fuel injector valves and spark plugs. The throttle actuator is responsive to a throttle-valve (Th/V) opening signal from an output interface 9e of an electronic control unit (ECU) 9 so as to control or adjust the throttle opening. The amount of fuel injected from each individual fuel injector valve is controlled by a fuel-injection amount signal from output interface 9e. A duty-cycle controlled pulse-width modulated signal is generally used as the fuel-injection amount signal. An ignition timing signal (or a pulse generator signal) for each spark plug is output from within output interface 9e so as to ignite air/fuel mixture within the combustion chamber in response to the ignition timing signal. On the other hand, CVT 2 is equipped with a lock-up actuator and a transmission-ratio actuator. The application and release of the lock-up clutch of the torque converter is controlled in response to a lock-up signal from output interface 9e. The transmission ratio actuator is provided to control the transmission ratio in response to the transmission ratio signal from output interface 9e, while varying the transmission ratio steplessly within limits. As clearly shown in Fig. 1, the throttle opening, fuel-injection amount, and ignition timing are controlled by means of ECU 9. The application and release of the torque converter lock-up clutch and the transmission ratio are also controlled by ECU 9. The ECU generally comprises a microcomputer. ECU 9 includes input and output interfaces 9a and 9e, memories (RAM denoted by 9c and ROM denoted by 9d), and a microprocessor or a central processing unit (CPU). Input interface 9a of ECU 9 receives input information from various engine/vehicle sensors, namely a crank angle sensor 10, an air-flow meter 11, an engine temperature sensor 12, a vehicle speed sensor 13 , and an accelerator sensor 14. Crank angle sensor 10 is provided to inform the ECU of the engine speed $N_E$. Air-flow meter 11 is provided to detect the quantity $Q_a$ of intake air drawn into the engine. Engine temperature sensor 12 is comprised of an engine coolant temperature sensor that detects a temperature of engine coolant. Vehicle speed sensor 13 is provided to detect vehicle speed V. Actually, a transmission output speed is monitored by vehicle speed sensor 13 and used as the vehicle speed. Accelerator sensor (ACC sensor) 14 is provided to detect a manipulated variable of the accelerator (an amount of depression of the accelerator pedal) and to generate an accelerator opening indicative signal (ACC sensor signal) Ace. Input interface 9a receives engine-speed indicative signal $N_E$ from the crank angle sensor, intake-air quantity indicative signal $Q_a$ from the air-flow meter, coolant temperature sensor signal $T_w$ from engine temperature sensor 12, vehicle speed sensor signal V from vehicle speed sensor 13, and accelerator opening indicative signal Acc from the ACC sensor. Within the ECU, the central processing unit (CPU) allows the access by the input interface of input informational data signals from the previously-discussed engine/vehicle sensors 10, 11, 12, 13, and 14. CPU 9b of ECU 9 is responsible for carrying the steady-state desired values arithmetic-calculation program (see Fig. 2)/transient-state desired values arithmetic-calculation program (see Fig. 5)/desired engine torque control program (desired engine torque/desired intake-air quantity/desired throttle opening arithmetic-calculation program)(see Fig. 9)/electronic fuel-injection control program/electronic ignition-timing control program/transmission torque converter lock-up control program/transmission ratio control program stored in memories and is capable of performing necessary arithmetic and logic operations shown in Figs . 2, 5 and 9. Computational results (arithmetic calculation results), that is, calculated output signals (solenoid drive currents) are relayed via output interface 9e of the ECU to output stages, namely the throttle actuator included in the engine output control system, fuel injector solenoids constructing part of the electronic fuel injection system, spark plugs constructing part of the electronic ignition system, and electromagnetic solenoid valves constructing part of a hydraulic modulator for lock-up control/transmission ratio control purposes.

Referring now to Fig. 2, there is shown the steady-state desired values (a steady-state desired engine torque and a steady-state desired transmission ratio) arithmetic-calculation routine executed within the CPU of ECU 9.

At step S30, a static desired driving force or a steady-state desired driving force is arithmetically calculated or computed on the basis of accelerator manipulated variable Acc from ACC sensor 14 and vehicle speed V from vehicle speed sensor 13. Actually, the static desired driving force is map-retrieved based on accelerator manipulated variable Acc and vehicle speed V from the preprogrammed or predetermined desired driving force map of Fig. 3 showing how the desired driving force has to be varied relative to both accelerator manipulated variable Acc and vehicle speed V. As appreciated from the desired driving force characteristic shown in Fig. 3, in the system of the shown embodiment, the desired driving force characteristic is predetermined by both the vehicle speed V and accelerator manipulated variable Acc, for the reasons set out below. This is because an engine torque characteristic of engine 1 and a transmission ratio characteristic of CVT 2 are determined depending upon both the vehicle speed and accelerator manipulated variable, and also the desired driving force characteristic can be determined as the product of the engine torque characteristic and the transmission ratio characteristic.

At step S31, the steady-state desired engine torque value is arithmetically calculated or computed based on the desired driving force obtained through step S30. Concretely, the steady-state desired engine torque value is calculated as a ratio of the desired driving force (retrieved from the preprogrammed desired driving force map of Fig. 3) to the actual transmission ratio. That is, the steady-state desired engine torque value is obtained by dividing the desired driving force by the actual transmission ratio (see the following equation). (steady-state desired engine torque value) =(desired driving force)/(actual transmission ratio) The actual transmission ratio is a ratio ($N_E$/V) of the engine speed $N_E$ (equal to the transmission input speed) to the vehicle speed V (equal to the transmission output speed).

At step S32, the steady-state desired transmission ratio is arithmetically calculated or computed on the basis of accelerator manipulated variable Ace and vehicle speed V. Concretely, the desired transmission input speed is first map-retrieved based on accelerator manipulated variable Acc and vehicle speed V from the preprogrammed or predetermined characteristic map of Fig. 4 showing how the desired transmission input speed has to be varied relative to both accelerator manipulated variable Acc and vehicle speed V. Thereafter, the steady-state desired transmission ratio is computed as a ratio of the desired transmission input speed to the vehicle speed (i.e., transmission output speed), that is, (steady-state desired transmission ratio)=(desired transmission input speed)/(vehicle speed).

Referring now to Fig. 5, there is shown the transient-state desired values (a transient-state desired engine torque and a transient-state desired transmission ratio) arithmetic-calculation routine executed within the CPU of ECU 9.

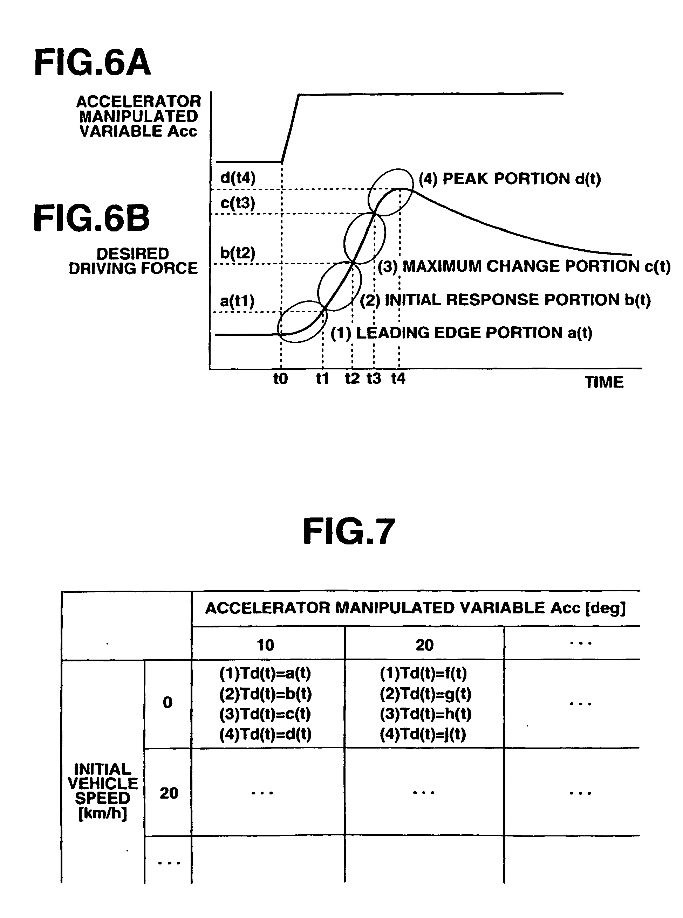

At step S60 , a desired driving-force change pattern is arithmetically calculated or computed based on the static desired driving force calculated through step S30 of Fig. 2. The desired driving-force change pattern is hereunder described in detail in reference to the driving-force characteristic curve of Fig. 6B showing how a driving force has to be varied intendedly with the lapse of time with the accelerator manipulated variable Ace risen at a time point to (see Fig. 6A). As can be seen in Figs. 6A and 6B, there is a difference in estimation of driver's acceleration feeling, owing to the time rate of change in acceleration (that is, the jerk) based on the driver's accelerator operation or the driver's accelerator pedal depression, in other words, owing to the time rate of change in the driving force. When finely and accurately analyzing variations or changes in the driving force (a response characteristic of the driving force) just after operation of the accelerator, the driving-force response characteristic curve is classified into at least four different portions or time periods, namely (1) a leading edge portion a(t), (2) an initial response portion b(t), (3) a maximum change portion c(t), and (4) a peak portion d(t). An ideal driving-force change pattern (or an ideal driving-force response characteristic) is different for each of the four different portions a(t), b(t), c(t), and d(t). In order to enhance the estimation of driver's acceleration feeling, each of the portions a(t), b(t), c(t), and d(t) requires the following points or features. That is, leading edge portion a (t) corresponding to the first time period (tl-t0) between t0 and t1 requires a smoothness (a smooth driving-force change). Initial response portion b(t) corresponding to the second time period (t2-t1) between t1 and t2 requires a rapidity (a rapid driving-force change). Maximum change portion c(t) corresponding to the third time period (t3-t2) between t2 and t3 requires a great magnitude (a great driving-force change). Peak portion d(t) corresponding to the fourth time period (t4-t3) between t3 and t4 requires a proper time of arrival (a properly timed arrival to the peak point) as well as a great magnitude (a great driving-force change). For the reasons set forth above, the ideal desired driving-force change pattern containing four portions a(t), b(t), c(t), and d(t) is predetermined or preprogrammed depending on the type of vehicle, the concept of vehicle, the size of engine the vehicles use, and the like (see Fig. 6B). Actually, for every vehicle speed V and for every accelerator manipulated variable Acc, required values for these desired driving-force change pattern are determined. Fig. 7 shows an example of the preprogrammed look-up table for required values which are formulated depending on both the accelerator manipulated variable Acc and the initial vehicle speed.

At step S61, the transient-state desired engine torque value is arithmetically calculated or computed based on the desired driving-force change pattern formulated (see the look-up table of Fig. 7). Concretely, the transient-state desired engine torque value is calculated as a ratio of the desired driving force (retrieved from the preprogrammed look-up table of Fig. 7) to the actual transmission ratio. That is, the transient-state desired engine torque value is obtained by dividing the desired driving force formulated by the actual transmission ratio, that is, (transient-state desired engine torque value)=(desired driving force formulated)/(actual transmission ratio). For instance, as shown in Figs. 6A and 6B, when the initial vehicle speed is 0[km/h], the accelerator manipulated variable Acc is 10 [degree], the accelerator is operated in a stepwise manner at t0 and thus accelerator manipulated variable Acc is risen stepwise at t0, the transient-state desired engine torque value Td(t) is determined for each time point (t1, t2, t3, t4) as follows.

(i) Regarding leading edge portion a(t), the transient-state desired engine torque value $T_d$(t1) is equal to a(t1)/(actual transmission ratio), since the desired driving force formulated is given as a(t1).
(ii) Regarding initial response portion b(t), the transient-state desired engine torque value $T_d$(t2) is equal to b(t2)/(actual transmission ratio), since the desired driving force formulated is given as b(t2).
(iii) Regarding maximum change portion c(t), the transient-state desired engine torque value $T_d$(t3) is equal to c(t3)/(actual transmission ratio), since the desired driving force formulated is given as c(t3).
(iv) Regarding peak portion d(t), the transient-state desired engine torque value $T_d$(t4) is equal to d(t4)/(actual transmission ratio), since the desired driving force formulated is given as d(t4).

At step S62, the transient-state desired transmission ratio is arithmetically calculated or computed based on the desired driving-force change pattern formulated and computed at step S60 (see the look-up table of Fig. 7). Concretely, the transient-state desired transmission ratio is calculated as follows. First of all, accelerator manipulated variable Acc is calculated or map-retrieved based on each of the desired driving forces a(t), b(t), ... d(t) calculated at step S60 and vehicle speed V from the preprogrammed characteristic map shown in Fig. 3. Secondly, the desired transmission input speed is calculated or map-retrieved based on the accelerator manipulated variable Acc retrieved and vehicle speed V from the preprogrammed characteristic map shown in Fig. 4. Thirdly, the transient-state desired transmission ratio is obtained or determined by dividing the desired transmission input speed by the vehicle speed (the transmission output speed).

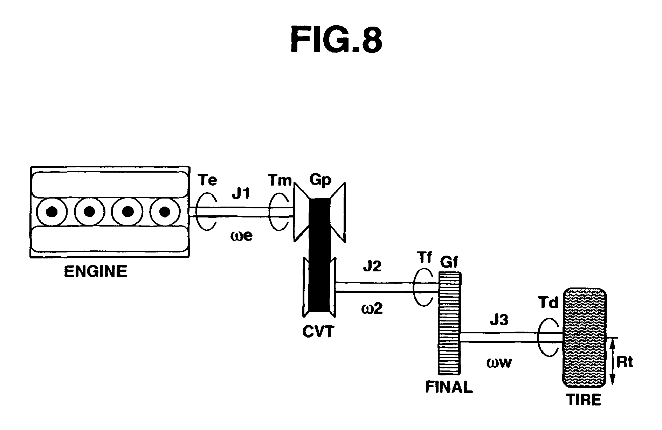

In calculating desired values from a required driving force, equations of motion for every part of a simplified power-train model shown in Fig. 8, comprised of an engine, a CVT, a final gear, and a drive wheel are considered or analyzed as follows.

First, basic equations of motion about each of shafts, namely a CVT input shaft, a CVT output shaft, and an axle driveshaft are represented by the following equations (1) - (6).

$$Te-Tm = J1 \cdot (d\omega_e/dt) \qquad \cdots\cdots(1)$$

$$Gp \cdot Tm-Tf = J2 \cdot (d\omega_2/dt) \qquad \cdots\cdots(2)$$

$$Gf \cdot Tf-Td = J3 \cdot (d\omega_w/dt) \qquad \cdots\cdots(3)$$

$$\omega_e = Gp \cdot \omega_2 \qquad \cdots\cdots(4)$$

$$\omega_2 = Gf \cdot \omega_w \qquad \cdots\cdots(5)$$

$$Td = Rt \cdot Fd \qquad \cdots\cdots(6)$$

where J1 denotes the moment of inertia (simply, the inertia) of the engine and the CVT input shaft, Te denotes engine torque, $\omega_e$, denotes engine speed (i.e., an angular velocity of the CVT input shaft), Tm denotes CVT input torque, J2 denotes the moment of inertia (simply, the inertia) of the CVT output shaft between the output side of the CVT and the input side of the final gear, Gp denotes a transmission ratio of the CVT, $\omega_2$ denotes an angular velocity of the CVT output shaft, $T_f$ denotes output torque of the CVT output shaft, J3 denotes the moment of inertia (simply, the inertia) of the axle driveshaft between the final gear and the drive wheel, $G_f$ denotes a reduction ratio of the final gear, $\omega_w$ denotes drive-wheel speed (i.e., an angular velocity of the axle driveshaft), $T_d$ denotes a driving torque, $F_d$ denotes a driving force, and Rt denotes an effective radius of a tire.

From the aforementioned equations of motion (1) - (6) the driving torque $T_d$ can be represented by the following expressions (7) and (8).

$$
\begin{aligned}
\mathtt{Td} &= \mathtt{Gf \cdot Tf - J3 \cdot (d\omega_w/dt)} \\
&= \mathtt{Gf \cdot \{Gp \cdot Tm - J2 \cdot (d\omega_2/dt)\} - J3 \cdot (d\omega_w/dt)} \\
&= \mathtt{Gf \cdot [Gp \cdot \{Te - J1 \cdot (d\omega_e/dt)\} - J2 \cdot (d\omega_2/dt)] - J3 \cdot (d\omega_w/dt)} \\
&= \mathtt{Gf \cdot Gp \cdot Te - Gf \cdot Gp \cdot J1 \cdot (d\omega_e/dt)} \\
&\quad \mathtt{-Gf \cdot J2 \cdot (d\omega_2/dt) - J3 \cdot (d\omega_w/dt)} \qquad \cdots\cdots(7)
\end{aligned}
$$

$$
\begin{aligned}
\mathtt{Td} &= \mathtt{Gf \cdot Gp \cdot Te - Gf^2 \cdot Gp \cdot J1 \cdot \omega_w \cdot (dGp/dt)} \\
&\quad \mathtt{-(Gf^2 \cdot Gp^2 \cdot J1 + Gf^2 \cdot J2 + J3) \cdot (d\omega_w/dt)} \qquad \cdots\cdots(8)
\end{aligned}
$$

where a first term $Gf \cdot Gp \cdot Te$ of the expression (8) corresponds to a driving torque produced by the engine torque, a second term $Gf^2 \cdot Gp \cdot Jl \cdot \omega_w \cdot (dGp/dt)$ corresponds to an inertia torque occurring due to a change in the transmission ratio of the CVT, and a third term $(Gf^2 \cdot Gp^2 \cdot J1 + Gf^2 \cdot J2 + J3) \cdot (d\omega_w/dt)$ corresponds to an inertia torque occurring due to a change in vehicle speed.

Hereinafter explained is a way to improve the response and smoothness for driving-force control characteristic. Of the first, second, and third terms of the above-mentioned expression (8), the third term $(Gf^2 \cdot Gp^2 \cdot J1 + Gf^2 \cdot J2 + J3) \cdot (d\omega_w/dt)$ corresponding to an inertia torque occurring due to a change in vehicle speed, is negligible, because the change in vehicle velocity tends to be less than the other factors, namely a change in the transmission ratio and a change in the engine torque. Therefore, the driving torque $T_d$ can be more simply rewritten by the following expression (9) by eliminating the third term.

$$
\mathtt{Td} = \mathtt{Gf \cdot Gp \cdot Te - Gf^2 \cdot Gp \cdot J1 \cdot \omega_w \cdot (dGp/dt)} \qquad \cdots\cdots(9)
$$

It is desirable to determine the desired engine torque and the desired transmission ratio so that the driving torque Td obtained by the above expression (9) is identical to the required driving force (or the desired driving force formulated) classified by conditions, that is, the accelerator manipulated variable and the initial vehicle speed (see the table of Fig. 7) . However, it is difficult to derive both the desired engine torque and the desired transmission ratio from only one driving-force equation. As can be appreciated from the following two differential equations (10) and (11), taking into account a derivative $T_d'$ of first order and a derivative $T_d''$ of second order for the driving torque equation (9), i.e., $T_d = Gf \cdot Gp \cdot Te - Gf^2 \cdot Gp \cdot J1 \cdot \omega_w \cdot (dGp/dt)$, the desired engine torque and the desired transmission ratio can be obtained by solving these differential equations (10) and (11) in such a manner as to match a time rate of change in the required driving force classified by the previously-noted conditions and a curvature of the required driving force classified by the previously-noted conditions. Exactly speaking, the time rate of change in the required driving force is related to the derivative $T_d'$ ($= dTd/dt$) of first order, whereas the curvature of the required driving force is related to both the derivative $T_d'$ ($= dT_d/dt$) of first order and the derivative $T_d''$ ($= d^2T_d/dt^2$) of second order. The curvature is represented as $T_d'' / \{1 + (T_d')^2\}^{3/2}$.

$$
\begin{aligned}
\mathtt{dTd/dt} &= \mathtt{Gf \cdot Gp \cdot (dTe/dt) + Gf \cdot Te \cdot (dGp/dt)} \\
&\quad \mathtt{-J1 \cdot Gf^2 \cdot \omega_w \cdot \{Gp \cdot d^2Gp/dt^2 + (dGp/dt)^2\}} \quad \cdots\cdots(10)
\end{aligned}
$$

$$
\begin{aligned}
&\mathtt{d^2Td/dt^2} \\
&= \mathtt{Gf \cdot \{Gp \cdot (d^2Te/dt^2) + 2(dTe/dt) \cdot (dGp/dt) + Te \cdot (dGp/dt)^2\}} \\
&\quad \mathtt{-J1 \cdot Gf \cdot \omega_w \cdot \{Gp \cdot d^3Gp/dt^3 + 3 \cdot (dGp/dt) \cdot (d^2Gp/dt^2)\} \cdots\cdots(11)}
\end{aligned}
$$

A solution of these differential equations (10) and (11) can be obtained by way of a general numerical solution such as an Euler's method or a Runge-Kutta method, on the assumption that a computing capacity of the CPU of ECU 9 is sufficient. Conversely when the computing capacity of the CPU of ECU 9 is insufficient, the solution of the driving-force equations (7), (8) or (9) for the desired engine torque and the desired transmission ratio may be pre-calculated offline, so that the driving force Td defined by the driving-force equations (7), (8), or (9) is identical to the required driving force classified by the previously-noted conditions shown in Fig. 7.

Referring now to Fig. 9, there is shown the engine torque control routine needed to realize the desired engine torque. In the same manner as the other routines shown in Figs. 2 and 5, this routine of Fig. 9 is executed as time-triggered interrupt routines to be triggered every predetermined time intervals.

At step S110, a desired engine torque is calculated by solving the differential equations (10) and (11) in such a manner as to match the time rate of change in the required driving force classified by the previously-noted conditions and the curvature in the required driving force classified by the previously-noted conditions.

At step S111, a desired intake-air quantity is calculated based on the desired engine torque. Concretely, the desired intake-air quantity is map-retrieved based on both the desired engine torque and the actual engine speed from a predetermined or preprogrammed characteristic map of Fig. 10 showing how the desired intake-air quantity has to be varied relative to both the desired engine torque and the actual engine speed.

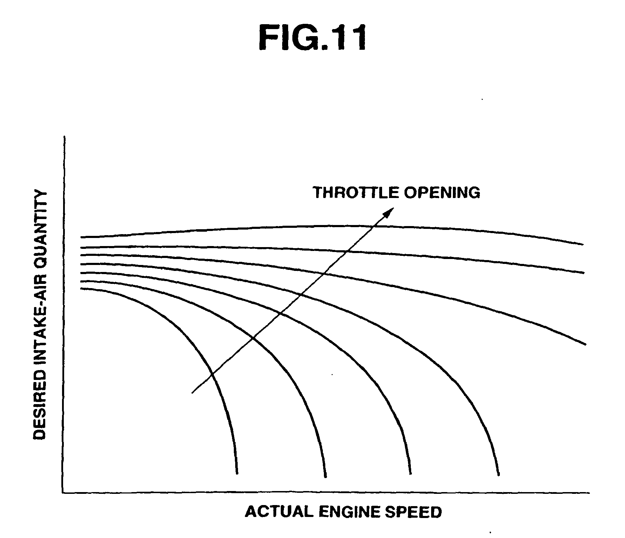

At step S112, a desired throttle-valve opening (desired Th/V opening) is calculated based on the desired intake-air quantity. In order to realize the desired intake-air quantity, concretely, the desired throttle opening is map-retrieved based on the desired intake-air quantity and the actual engine speed from a predetermined or preprogrammed characteristic map of Fig. 11 showing how the desired throttle opening has to be varied relative to both the actual engine speed and the desired intake-air quantity. Thereafter, in order to realize the desired engine torque, the throttle-valve opening signal corresponding to the desired throttle opening is output from a throttle-valve actuator control section of ECU 9 via the output interface to the throttle actuator, so as to set the throttle valve at the desired throttle opening obtained through step S112. The throttle-valve actuator control section is included in a desired engine torque realization section (or a desired engine torque realization means). Therefore, the desired engine torque can be realized by way of the intake-air quantity control that ensures a smooth engine torque change without deteriorating the driveability (without the undesirable torque difference). Additionally, in a similar manner as discussed above, a desired transmission ratio is also calculated by solving the differential equations (10) and (11) in such a manner as to match the time rate of change in the required driving force classified by the previously-noted conditions and the curvature in the required driving force classified by the previously-noted conditions. As previously discussed, on the other hand, the actual transmission ratio is calculated as the ratio ($N_E$/V) of the engine speed $N_E$ (= transmission input speed) to the vehicle speed V (= transmission output speed). Thereafter, in order to realize the desired transmission ratio, the transmission ratio signal corresponding to the desired transmission ratio is output from a transmission-ratio actuator control section of ECU 9 via the output interface to the transmission ratio actuator, so that the actual transmission ratio is brought closer to the desired transmission ratio, by setting the actual transmission ratio at the desired transmission ratio. The transmission-ratio actuator control section is included in a desired transmission ratio realization section (or a desired transmission ratio realization means). Therefore, the desired transmission ratio can be realized by way of the transmission ratio control that ensures a smooth transmission ratio change without deteriorating the driveability (without the undesirable torque difference).

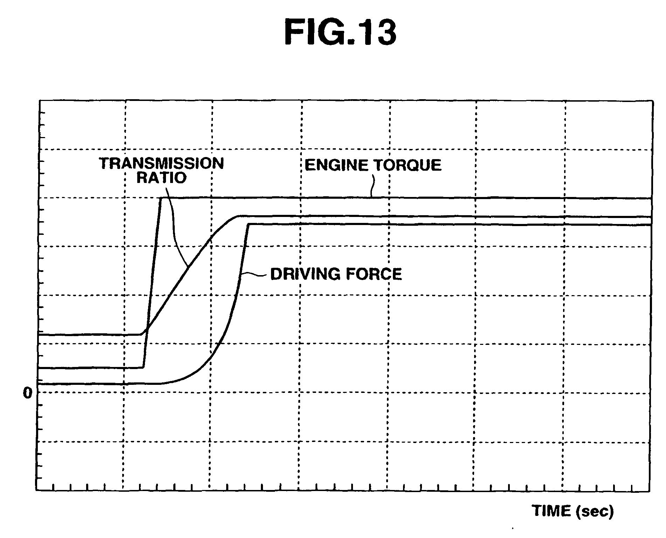

As discussed above, according to the driving force control apparatus of the embodiment, the desired engine torque (Te) and the desired transmission ratio (Gp) are computed or derived in real time from the expressions (9), (10), and (11), on the basis of the desired driving-force change pattern of Fig. 7 (the desired driving-force characteristic curve of Fig. 6B), which pattern is predetermined depending on the type of the vehicle, the concept of the vehicle and the like. Engine 1 and CVT 2 are simultaneously controlled based on the desired engine torque (Te) calculated and desired transmission ratio (Gp) calculated. That is, in the driving force control apparatus of the embodiment, the engine torque and the transmission ratio are both tune-controlled such that engine torque control and transmission ratio control progress simultaneously smoothly, as shown in Fig. 13. As can be appreciated from the time rate of change and the curvature of the lowermost smooth driving-force characteristic curve shown in Fig. 13, the desired driving-force change pattern, that is, the smooth and rapid response characteristic for the driving torque can be ensured. In other words, the driving force can be risen up smoothly rapidly (see the smoothly risen driving-force characteristic curve of Fig. 13).

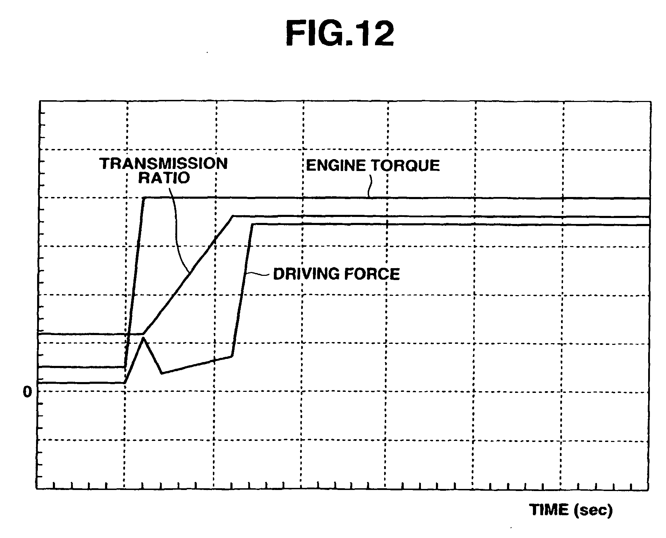

On the contrary, in case that engine 1 and CVT 2 are controlled independently of each other, as can be appreciated from the expression (8), in the presence of shifting, the inertia torque component occurring due to the change in the transmission ratio of the CVT (corresponding to the second term $Gf^2 \cdot Gp \cdot J1 \cdot \omega_w \cdot (dGp/dt)$) tends to be subtracted from the driving torque component produced by the engine torque (corresponding to the first term $Gf \cdot Gp \cdot Te$). As a result, the response and smoothness of the driving-force control characteristic are prevented or deteriorated (see the polygonal-line driving-force characteristic shown in Fig. 12). As seen in Fig. 12, according to the independent control, the driving force rises up temporarily owing to a rise in engine torque. When the transmission ratio varies with a time delay from the timing when the engine torque starts to rise, the driving force control apparatus based on the independent control exhibits a driving-force characteristic that the driving force greatly drops owing to the inertia torque component occurring due to the change in the transmission ratio of the CVT. As a result, it is impossible to realize a smooth rise in the driving force, thus deteriorating the vehicle driveability.

As set forth above, the driving force control apparatus of the first embodiment includes a desired driving force calculation section (or a desired driving force calculation means) that calculates a static desired driving force based on both the accelerator manipulated variable Ace and vehicle speed V, a desired driving-force change pattern calculation section (or a desired driving-force change pattern calculation means) that calculates, based on the static desired driving force, a desired driving-force change pattern defined by a time rate of change in the desired driving force and a curvature of the desired driving force, a steady-state desired value calculation section (or a steady-state desired value calculation means) that calculates a steady-state desired engine torque value based on the static desired driving force and calculates a steady-state desired transmission ratio based on both the accelerator manipulated variable Acc and vehicle speed V, a transient-state desired value calculation section (or a transient-state desired value calculation means) that calculates a transient-state desired engine torque value and a transient-state desired transmission ratio, using predetermined physical expressions (predetermined equations of motion) to satisfy the desired driving-force change pattern, and an engine-torque and transmission-ratio tune-control section capable of simultaneously progressing both engine torque control and transmission ratio control so as to realize the desired values, namely the steady-state desired engine torque value, the steady-state desired transmission ratio, the transient-state desired engine torque value, and the transient-state desired transmission ratio. For the reasons set out above, the driving force control apparatus of the embodiment is suitable to various transient vehicle's acceleration patterns. That is, in the control apparatus of the first embodiment, the driving-force response characteristic, the smoothness of the driving-force characteristic curve, and the magnitude of the acceleration rate can be smoothly optimally controlled even in a transient accelerating state. This greatly improves the vehicle driveability (containing the acceleration performance) and engine power output. In other words, the driver-required driving torque (i.e., the driver-required or driver's intended acceleration rate) can be realized even during initial acceleration, thus enhancing the acceleration feeling.

In a driving force control apparatus of the second embodiment, on the basis of the desired driving-force change pattern of Fig. 7 predetermined depending on at least the type of the vehicle and the concept of the vehicle, a final desired engine torque (Te) is computed, determined or derived from both the steady-state desired engine torque value calculated through step S31 and the transient-state desired engine torque value calculated through step S61, while a final desired transmission ratio ($G_p$) is computed, determined or derived from both the steady-state desired transmission ratio calculated through step S32 and the transient-state desired transmission ratio calculated through step S62. Then, engine 1 and CVT 2 are tune-controlled based on the final desired engine torque ($T_e$) and the final desired transmission ratio ($G_p$). That is, instead of using the previously-noted differential equations (10) and (11) in step S110, the steady-state desired engine torque value calculated through step S31 of Fig. 2 and the transient-state desired engine torque value calculated through step S61 of Fig. 5 are both used to finally determine the desired engine torque ($T_e$), based on the desired driving-force change pattern of Fig. 7. The control apparatus of the second embodiment can provide the same effects and operation as the first embodiment. In case that the transient-state desired value (the transient-state desired engine torque value or the transient-state desired transmission ratio) is set as an absolute value, the transient-state desired value may be used in lieu of the steady-state desired value.

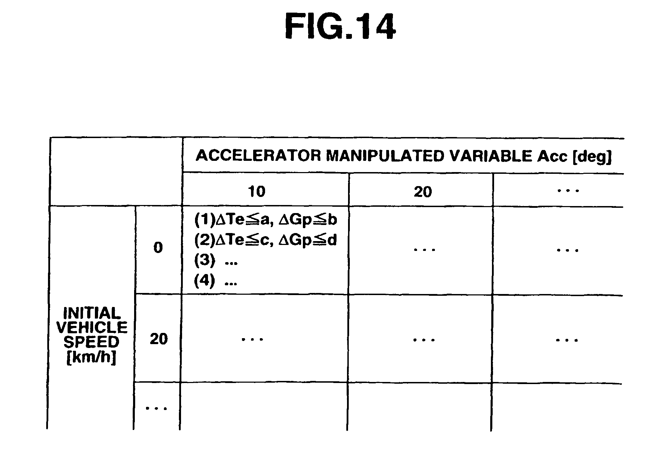

In a driving force control apparatus of the third embodiment, on the assumption that the computing capacity of the CPU of ECU 9 is insufficient, the solution of the driving-force equations (7), (8) or (9) for the desired engine torque and the desired transmission ratio is pre-calculated offline and additionally a time rate of change $\Delta T_e$ in engine torque and a time rate of change $\Delta G_p$ in transmission ratio are preset as map data and classified by conditions, namely the accelerator manipulated variable and the initial vehicle speed (see Fig. 14). Taking into account the insufficient computing capacity of the CPU of ECU 9, the solution of the driving-force equations (7), (8) or (9) for the desired engine torque and the desired transmission ratio is pre-calculated offline, so that the driving force $T_d$ defined by the driving-force equations (7), (8), or (9) is identical to the required driving force classified by the previously-noted conditions shown in Fig. 7. On the other hand, as shown in Fig. 14, a time rate of change $\Delta T_e$ in engine torque and a time rate of change $\Delta G_p$ in transmission ratio are preset as map data, for every conditions. By way of map-retrieval from the predetermined or preprogrammed map of Fig. 14, the desired engine torque ($T_e$) and the desired transmission ratio ($G_p$) are derived or computed. Engine 1 and CVT 2 are controlled based on the desired engine torque ($T_e$) and desired transmission ratio ($G_p$) computed. The control apparatus of the third embodiment can provide the same effects and operation as the first embodiment.

As will be appreciated from the above, in the driving force control apparatus of the embodiments, the deviation of the actual driving force from the desired value, resulting from inertia torque occurring owing to the delay in the automatic transmission shifting and a change in wheel speed, is not compensated for by only the engine torque control. In lieu thereof, the driving force control apparatus of the embodiment has a control specification that a transient-state desired value for the driving force as well as a steady-state desired value for the driving force can be achieved or realized by way of tune-control for both the engine torque and the transmission ratio, thus ensuring a good transient acceleration feeling in particular during the early stages of the vehicle acceleration. Furthermore, in order to provide the desired acceleration performance and the desired vehicle driveability, a change pattern for the driving force with respect to time t is formulated and classified by predetermined conditions, namely the accelerator manipulated variable Acc and vehicle speed V (see Figs. 6B and 7). Therefore, there is an increased tendency for the desired driving force to change smoothly in the positive time-axis direction. This enhances or improves the acceleration performance and vehicle driveability. Moreover, the driving force (or the driving torque) is formulated, taking into account all of the engine torque, the transmission ratio, the inertia torque occurring due to the change in the transmission ratio, and the inertia torque occurring due to the change in vehicle speed (or due to the change in drive wheel speed). The previously change pattern for the driving force is defined based on both the rate of change in the driving force with respect to time t and the curvature of the driving force with respect to time t. Equations of motion for the driving force (or the driving torque), and differential equations for a change in the driving force (or the driving torque) are utilized. The equations of motion (containing the differential equations) are solved so that the change pattern for the driving force is identical to the desired driving-force change pattern that provides the desired acceleration performance and vehicle driveability. Thus, it is possible to obtain a realistic or practical solution of the equations of motion for the engine torque and the transmission ratio, both needed to realize the driver-required driving force (in other words, the driver's intended acceleration rate).

## Claims

1.  A driving force control apparatus for an automotive vehicle equipped with a power train having an engine and a transmission, comprising:

    a first sensor (14) detecting a manipulated variable (Acc) of an accelerator,
    a second sensor (13) detecting a vehicle speed (V);
    a desired driving force calculation section that calculates a static desired driving force based on both the manipulated variable (Acc) and the vehicle speed (V);
    a steady-state desired value calculation section that calculates a steady-state desired engine torque value based on the static desired driving force and calculates a steady-state desired transmission ratio based on both the manipulated variable (Acc) of the accelerator and the vehicle speed (V);

    **characterized by**
    a driving-force change pattern calculation section that calculates a desired driving-force change pattern based on the static desired driving force;
    a transient-state desired value calculation section that calculates a transient-state desired engine torque value and a transient-state transmission ratio, based on the desired driving-force change pattern; a desired engine torque realization section that realizes the transient-state desired engine torque value as well as the steady-state desired engine torque value; and
    a desired transmission ratio realization section that realizes the transient-state desired transmission ratio as well as the steady-state desired transmission ratio.

2.  A driving force control apparatus for an automotive vehicle according to claim 1, **characterized by** an engine-torque and transmission-ratio tune-control section capable of simultaneously progressing both

    (a) engine torque control for the steady-state desired engine torque value and the transient-state desired engine torque value and
    (b) transmission ratio control for the steady-state desired transmission ratio and the transient-state desired transmission ratio.

3.  A driving force control apparatus for an automotive vehicle according to claim 1 or 2, **characterized in that** the desired driving-force change pattern calculated by the driving-force change pattern calculation section is formulated as a change pattern for a desired driving force with respect to time (t), to provide a desired acceleration performance and a desired vehicle driveability.

4.  A driving force control apparatus for an automotive vehicle according to claim 3, **characterized in that** the desired driving-force change pattern is classified by predetermined conditions including at least the manipulated variable (Acc) of the accelerator and the vehicle speed (V).

5.  A driving force control apparatus for an automotive vehicle according to claim 1 or 2, **characterized in that** within the desired driving-force change pattern calculation section, a driving force is formulated taking into account at least an engine torque, a transmission ratio, an inertia torque occurring due to a change in the transmission ratio, and an inertia torque occurring due to a change in the vehicle speed, and a change pattern for the driving force is defined based on both a rate of change in the driving force with respect to time (t) and a curvature of the driving force with respect to time (t), and equations of motion for the driving force are solved so that the change pattern for the driving force is identical to the desired driving-force change pattern that provides a desired acceleration performance and a desired vehicle driveability.

6. A driving force control apparatus for an automotive vehicle according to at least one of the claims 1 to 5, **characterized in that** the desired engine torque realization section comprises:

(1) a desired intake-air quantity calculation section calculating a desired intake-air quantity based on a desired engine torque corresponding to either the steady-state desired engine torque value or the transient-state desired engine torque value;
(2) a desired throttle-valve opening calculation section calculating a desired throttle opening of a throttle valve based on the desired intake-air quantity; and
(3) a throttle-valve actuator control section setting the throttle valve at the desired throttle opening.

7. A driving force control apparatus for an automotive vehicle according to at least one of the claim 1 to 6, **characterized in that** the transmission comprises a continuously variable automatic transmission whose transmission ratio is variable steplessly, and wherein the desired transmission ratio realization section comprises:

(1) an actual transmission ratio calculation section calculating an actual transmission ratio as a ratio of a transmission input speed to a transmission output speed; and
(2) a transmission-ratio actuator control section setting the actual transmission ratio at a desired transmission ratio corresponding to either the steady-state desired transmission ratio or the transient-state desired transmission ratio, so that the actual transmission ratio is brought closer to the desired transmission ratio.

8. A driving force control apparatus for an automotive vehicle according to claim 5, **characterized in that** one of the equations of motion for the driving force is defined as follows:

$$Td = Gf \cdot Gp \cdot Te - Gf^2 \cdot Gp \cdot J1 \cdot \omega_w \cdot (dGp/dt)$$
$$-(Gf^2 \cdot Gp^2 \cdot J1 + Gf^2 \cdot J2 + J3) \cdot (d\omega_w/dt)$$

where J1 denotes a moment of inertia of the engine and a transmission input shaft, Te denotes the engine torque, J2 denotes a moment of inertia of a transmission output shaft between an output side of the transmission and an input side of a final gear, Gp denotes the transmission ratio, J3 denotes a moment of inertia of an axle driveshaft between the final gear and a drive wheel, Gf denotes a reduction ratio of the final gear, $\omega_w$ denotes an angular velocity of the axle driveshaft, and Td denotes a driving torque, and a first term $Gf \cdot Gp \cdot Te$ corresponds to the driving torque produced by the engine torque, a second term $Gf^2 \cdot GP \cdot J1 \cdot \omega_w \cdot (dGp/dt)$ corresponds to the inertia torque occurring due to the change in the transmission ratio, and a third term $(Gf^2 \cdot Gp^2 \cdot j1 + Gf^2 \cdot J2 + J3) \cdot (d\omega_w/dt)$ corresponds to the inertia torque occurring due to the change in the vehicle speed.

9. A driving force control apparatus for an automotive vehicle according to claim 5, **characterized in that** one of the equations of motion for the driving force is defined as follows:

$$Td = Gf \cdot Gp \cdot Te - Gf^2 \cdot Gp \cdot J1 \cdot \omega_w \cdot (dGp/dt)$$

where J1 denotes a moment of inertia of the engine and a transmission input shaft, Te denotes the engine torque, Gp denotes the transmission ratio, Gf denotes a reduction ratio of a final gear, $\omega_w$ denotes an angular velocity of an axle driveshaft, and Td denotes a driving torque, and a first term $Gf \cdot Gp \cdot Te$ corresponds to the driving torque produced by the engine torque, and a second term $Gf^2 \cdot Gp \cdot J1 \cdot \omega_w \cdot (dGp/dt)$ corresponds to the inertia torque occurring due to the change in the transmission ratio.

10. A driving force control apparatus for an automotive vehicle according to claim 9, **characterized in that** the transient-state desired engine torque value and the transient-state desired transmission ratio are obtained by solving the following two differential equations in such a manner as to match a time rate of change in a required driving force classified by predetermined conditions including at least the manipulated variable (Acc) of the accelerator and the vehicle speed (V) and a curvature of the required driving force, one of the two differential equations corresponding to a differential equation Td' of first order for the equation of motion Td = Gf·Gp·Te-Gf²·Gp·J1·$\omega_w$·(dGp/dt) and the other corresponding to a differential equation Td" of second order for the equation of motion Td = Gf·Gp·Te-Gf²·Gp·J1·$\omega_w$·(dGp/dt), and the time rate of change in the required driving force being related to the first-order differential equation dTd/dt (=Td'), the curvature of the required driving force being related to both the first-order differential equation dTd/dt (=Td') and the second-order differential equation $d^2$Td/$dt^2$ (=Td"), and the curvature being represented as

$$Td''/\{1+(Td')^2\}^{3/2}:$$

$$dTd/dt \quad = \quad Gf·Gp·(dTe/dt)+Gf·Te·(dGp/dt)$$
$$-J1·Gf^2·\omega_w·\{Gp·d^2Gp/dt^2+(dGp/dt)^2\}$$

$$d^2Td/dt^2 = \quad Gf·\{Gp·(d^2Te/dt^2)+2(dTe/dt)·(dGp/dt)+Te·(dGp/dt)^2\}$$
$$-J1·Gf·\omega_w·\{Gp·d^3Gp/dt^3+3·(dGp/dt)·(d^2Gp/dt^2)\}.$$

**Patentansprüche**

1. Antriebskraft-Steuervorrichtung für ein Kraftfahrzeug, das mit einem Antriebsstrang versehen ist, der einen Motor und ein Getriebe aufweist, wobei sie umfasst:

   einen ersten Sensor (14), der eine Betätigungs-Variable (Acc) eines Gaspedals erfasst;
   einen zweiten Sensor (13), der eine Fahrzeuggeschwindigkeit (V) erfasst;
   einen Abschnitt zum Berechnen einer gewünschten Antriebskraft, der eine statische gewünschte Antriebskraft auf Basis sowohl der Betätigungs-Variable (Acc) als auch der Fahrzeuggeschwindigkeit (V) berechnet;
   einen Abschnitt zum Berechnen eines gewünschten Gleichgewichtszustand-Wertes, der einen gewünschten Gleichgewichtszustand-Motordrehmomentwert auf Basis der gewünschten statischen Antriebskraft berechnet und ein gewünschtes Gleichgewichtszustand-Übersetzungsverhältnis auf Basis sowohl der Betätigungs-Variable (Acc) des Gaspedals als auch der Fahrzeuggeschwindigkeit (V) berechnet;

   **gekennzeichnet durch**
   einen Abschnitt zum Berechnen eines Antriebskraft-Änderungsmusters, der ein gewünschtes Antriebskraft-Änderungsmuster auf Basis der gewünschten statischen Antriebskraft berechnet;
   einen Abschnitt zum Berechnen eines gewünschten Übergangszustand-Wertes, der einen gewünschten Übergangszustand-Motordrehmomentwert und ein Übergangszustand-Übersetzungsverhältnis auf Basis des gewünschten Antriebskraft-Änderungsmusters berechnet;
   einen Abschnitt zum Realisieren eines gewünschten Motordrehmomentes, der den gewünschten Übergangszustand-Motordrehmomentwert sowie den gewünschten Gleichgewichtszustand-Motordrehmomentwert realisiert; und
   einen Abschnitt zum Realisieren eines gewünschten Übersetzungsverhältnisses, der das gewünschte Übergangszustand-Übersetzungsverhältnis sowie das gewünschte Gleichgewichtzustand-Übersetzungsverhältnis realisiert.

2. Antriebskraft-Steuervorrichtung für ein Kraftfahrzeug nach Anspruch 1, **gekennzeichnet durch** einen Abschnitt zum Steuern der Abstimmung von Motordrehmoment und Übersetzungsverhältnis, der in der Lage ist, gleichzeitig sowohl

   a) Motordrehmomentsteuerung für den gewünschten Gleichgewichtszustand-Motordrehmomentwert und den gewünschten Übergangszustand-Drehmomentwert als auch

b) Übersetzungsverhältnissteuerung für das gewünschte Gleichgewichtszustand-Übersetzungsverhältnis und das gewünschte Übergangszustand-Übersetzungsverhältnis durchzuführen.

3. Antriebskraft-Steuervorrichtung für ein Kraftfahrzeug nach Anspruch 1 oder 2, **dadurch gekennzeichnet, dass** das gewünschte Antriebskraft-Änderungsmuster, das durch den Abschnitt zum Berechnen des Antriebskraft-Änderungsmusters berechnet wird, als ein Änderungsmuster für eine gewünschte Antriebskraft bezüglich der Zeit (t) formuliert wird, um eine gewünschte Beschleunigungsleistung und ein gewünschtes Fahrzeug-Fahrverhalten zu ermöglichen.

4. Antriebskraft-Steuervorrichtung für ein Kraftfahrzeug nach Anspruch 3, **dadurch gekennzeichnet, dass** das gewünschte Antriebskraft-Änderungsmuster nach vorgegebenen Bedingungen eingestuft wird, die wenigstens die Betätigungs-Variable (Acc) des Gaspedals und der Fahrzeuggeschwindigkeit einschließen.

5. Antriebskraft-Steuervorrichtung für ein Kraftfahrzeug nach Anspruch 1 oder 2, **dadurch gekennzeichnet, dass** in dem Abschnitt zum Berechnen des gewünschten Antriebskraft-Änderungsmusters eine Antriebskraft unter Berücksichtigung wenigstens eines Motordrehmoment, eines Übersetzungsverhältnisses, eines Trägheitsmomentes, das aufgrund einer Änderung des Übersetzungsverhältnisses auftritt, und eines Trägheitsmomentes, das aufgrund einer Änderung der Fahrzeuggeschwindigkeit auftritt, formuliert wird, und ein Änderungsmuster für die Antriebskraft sowohl auf Basis einer Rate der Änderung der Antriebskraft bezüglich der Zeit (t) als auch einer Krümmung der Antriebskraft bezüglich der Zeit (t) definiert wird und Bewegungsgleichungen für die Antriebskraft so gelöst werden, dass das Änderungsmuster für die Antriebskraft identisch mit dem gewünschten Antriebskraft-Änderungsmuster ist, das eine gewünschte Beschleunigungsleistung und ein gewünschtes Fahrzeug-Fahrverhalten ermöglicht.

6. Antriebskraft-Steuervorrichtung für ein Kraftfahrzeug nach wenigstens einem der Ansprüche 1 bis 5, **dadurch gekennzeichnet, dass** der Abschnitt zum Realisieren des gewünschten Motordrehmomentes umfasst:

1) einen Abschnitt zum Berechnen einer gewünschten Ansaugluftmenge, der eine gewünschte Ansaugluftmenge auf Basis eines gewünschten Motordrehmomentes berechnet, das entweder dem gewünschten Gleichgewichtszustand-Motordrehmomentwert oder dem gewünschten Übergangszustand-Motordrehmomentwert entspricht;
2) einen Abschnitt zum Berechnen einer gewünschten Drosselklappenöffnung, der eine gewünschte Drosselöffnung einer Drosselklappe auf Basis der gewünschten Ansaugluftmenge berechnet; und
3) einen Drosselklappen-Stellglied-Steuerabschnitt, der die Drosselklappe in die gewünschte Drosselöffnung versetzt.

7. Antriebskraft-Steuervorrichtung für ein Kraftfahrzeug nach wenigstens einem der Ansprüche 1 bis 6, **dadurch gekennzeichnet, dass** das Getriebe ein stufenloses Automatikgetriebe umfasst, dessen Übersetzungsverhältnis stufenlos geändert werden kann, und wobei der Abschnitt zum Realisieren des gewünschten Übersetzungsverhältnisses umfasst:

1) einen Abschnitt zum Berechnen eines Ist-Übersetzungsverhältnisses, der ein Ist-Übersetzungsverhältnis als ein Verhältnis einer Getriebe-Eingangsdrehzahl zu einer Getriebe-Ausgangsdrehzahl berechnet; und
2) einen Übersetzungsverhältnis-Stellglied-Steuerabschnitt, der das Ist-Übersetzungsverhältnis auf ein gewünschtes Übersetzungsverhältnis einstellt, das entweder dem gewünschten Gleichgewichtszustand-Übersetzungsverhältnis oder dem gewünschten Übergangszustand-Übersetzungsverhältnis entspricht, so dass das Ist-Übersetzungsverhältnis näher an das gewünschte Übersetzungsverhältnis gebracht wird.

8. Antriebskraft-Steuervorrichtung für ein Kraftfahrzeug nach Anspruch 5, **dadurch gekennzeichnet, dass** eine der Bewegungsgleichungen für die Antriebskraft wie folgt definiert wird:

$$Td = Gf \bullet Gp \bullet Te - Gf^2 \bullet Gp \bullet J1 \bullet \omega_w(dGp/dt)$$

$$-(Gf^2 \bullet Gp^2 \bullet J1 + Gf^2 \bullet J2 + J3) \bullet (d\omega_w dt)$$

wobei J1 ein Trägheitsmoment des Motors und einer Getriebeeingangswelle bezeichnet, Te das Motordrehmoment bezeichnet, J2 ein Trägheitsmoment einer Getriebeausgangswelle zwischen einer Ausgangsseite des Getriebes und einer Eingangsseite eines abschließenden Zahnrads bezeichnet, Gp das Übersetzungsverhältnis bezeichnet, J3 ein Trägheitsmoment einer Achs-Antriebswelle zwischen dem abschließenden Zahnrad und einem Antriebsrad bezeichnet, Gf ein Untersetzungsverhältnis des abschließenden Zahnrades bezeichnet, $\omega_w$ eine Winkelgeschwindigkeit der Achsantriebswelle bezeichnet und Td ein Antriebsdrehmoment bezeichnet, und ein erster Term Gf • Gp • Te dem durch das Motordrehmoment erzeugten Antriebsdrehmoment entspricht, ein zweiter Term $Gf^2$ • Gp • J1 • $\omega_w$ • (dGp/dt) dem Trägheitsmoment entspricht, das aufgrund der Änderung des Übersetzungsverhältnisses auftritt, und ein dritter Term $(Gf^2 \cdot Gp^2 \cdot J1 + Gf^2 \cdot J2 + J3) \cdot (d\omega_w/dt)$ dem Trägheitsmoment entspricht, das aufgrund der Änderung der Fahrzeuggeschwindigkeit auftritt.

9. Antriebskraft-Steuervorrichtung für ein Kraftfahrzeug nach Anspruch 5, **dadurch gekennzeichnet, dass** eine der Bewegungsgleichungen für die Antriebskraft wie folgt definiert ist:

$$Td = Gf \bullet Gp \bullet Te\text{-}Gf^2 \bullet Gp \bullet J1 \bullet \omega_w \bullet (dGp/dt)$$

wobei J1 ein Trägheitsmoment des Motors und einer Getriebeeingangswelle bezeichnet, Te das Motordrehmoment bezeichnet, Gp das Übersetzungsverhältnis bezeichnet, Gf ein Untersetzungsverhältnis eines abschließenden Zahnrades bezeichnet, $\omega_w$ eine Winkelgeschwindigkeit einer Achsantriebswelle bezeichnet und Td ein Antriebsdrehmoment bezeichnet, und ein erster Term Gf • Gp • Te dem durch das Motordrehmoment erzeugten Antriebsdrehmoment entspricht und ein zweiter Term $Gf^2$ • Gp • J1 • $\omega_w$ • (dGp/dt) dem Trägheitsmoment entspricht, das aufgrund der Änderung des Übersetzungsverhältnisses auftritt.

10. Antriebskraft-Steuervorrichtung für ein Kraftfahrzeug nach Anspruch 9, **dadurch gekennzeichnet, dass** der gewünschte Übergangszustand-Motordrehmomentwert und das gewünschte Übergangszustand-Übersetzungsverhältnis ermittelt werden, indem die zwei folgenden Differenzialgleichungen so gelöst werden, dass sie einer zeitlichen Rate einer Änderung einer erforderlichen Antriebskraft, die nach vorgegebenen Bedingungen eingestuft wird, die wenigstens die Betätigungs-Variable (Acc) des Gaspedals und die Fahrzeuggeschwindigkeit (V) einschließen, und einer Krümmung der erforderlichen Antriebskraft entsprechen, wobei eine der zwei Differenzialgleichungen einer Differenzialgleichung Td' erster Ordnung für die Bewegungsgleichung
Td = Gf • Gp • Te-$Gf^2$ • Gp • J1 • $\omega_w$ • (dGp/dt) entspricht und die andere einer Differenzialgleichung Td" zweiter Ordnung für die Bewegungsgleichung
Td = Gf • Gp • Te-$Gf^2$ • Gp • J1 • $\omega_w$ • (dGp/dt) entspricht, und die zeitliche Rate der Änderung der erforderlichen Antriebskraft auf die Differenzialgleichung erster Ordnung dTd/dt (=Td') bezogen wird, die Krümmung der erforderlichen Antriebskraft sowohl auf die Differenzialgleichung erster Ordnung dTd/dt (=Td') als auch die Differenzialgleichung zweiter Ordnung $d^2Td/dt^2$ (=Td") bezogen wird und die Krümmung dargestellt wird als $Td''\{1+(Td')^2\}^{3/2}$:

$$dTd/dt = Gf \bullet GP \bullet (dTe/dt) + Gf \bullet Te \bullet (dGp/dt)$$
$$-J1 \bullet Gf^2 \bullet \omega_w \bullet \{Gp \bullet d^2Gp/dt^2 + (dGp/dt)^2\}$$

$$d^2Td/dt^2 = Gf \bullet \{Gp \bullet (d^2Te/dt^2) + 2(dTe/dt) \bullet (dGp/dt) + Te \bullet (dGp/dt)^2\}$$
$$-J1 \bullet Gf \bullet \omega_w \bullet \{Gp \bullet d^3Gp/dt^3 + 3 \bullet (dGp/dt) \bullet (d^2Gp/dt^2)\}.$$

## Revendications

1. Dispositif de commande de la force d'entraînement pour un véhicule automobile équipé d'un groupe motopropulseur ayant un moteur et une transmission, comprenant:

un premier capteur (14) détectant une variable de manipulation (Acc) d'un accélérateur;
un second capteur (13) détectant une vitesse du véhicule (V);
une partie de calcul de la force d'entraînement souhaitée qui calcule une force d'entraînement statique souhaitée en se basant à la fois sur la variable de manipulation (Acc) et sur la vitesse du véhicule (V);
une partie de calcul de la valeur souhaitée en régime permanent qui calcule une valeur souhaitée du couple moteur en régime permanent en se basant sur la force d'entraînement statique souhaitée et qui calcule un rapport de transmission souhaité en régime permanent en se basant à la fois sur la variable de manipulation (Acc) de l'accélérateur et sur la vitesse du véhicule (V);

**caractérisé par**
une partie de calcul du modèle de variation de la force d'entraînement qui calcule un modèle de variation souhaité de la force d'entraînement en se basant sur la force d'entraînement statique souhaitée;
une partie de calcul de la valeur souhaitée en régime transitoire qui calcule une valeur souhaitée du couple moteur en régime transitoire et un rapport de transmission en régime transitoire, en se basant sur le modèle de variation souhaité de la force d'entraînement;
une partie de réalisation du couple moteur souhaité qui réalise la valeur souhaitée du couple moteur en régime transitoire ainsi que la valeur souhaitée du couple moteur en régime permanent; et
une partie de réalisation du rapport de transmission souhaité qui réalise le rapport de transmission souhaité en régime transitoire ainsi que le rapport de transmission souhaité en régime permanent.

2. Dispositif de commande de la force d'entraînement pour un véhicule automobile selon la revendication 1, **caractérisé par** une partie de commande de réglage du couple moteur et du rapport de transmission capable de faire évoluer simultanément (a) la commande du couple moteur pour la valeur souhaitée du couple moteur en régime permanent et pour la valeur souhaitée du couple moteur en régime transitoire et (b) la commande du rapport de transmission pour le rapport de transmission souhaité en régime permanent et pour le rapport de transmission souhaité en régime transitoire.

3. Dispositif de commande de la force d'entraînement pour un véhicule automobile selon la revendication 1 ou 2, **caractérisé en ce que** le modèle de variation souhaité de la force d'entraînement calculé par la partie de calcul du modèle de variation de la force d'entraînement est formulé comme un modèle de variation d'une force d'entraînement souhaitée par rapport au temps (t), pour fournir une performance d'accélération souhaitée et un comportement de roulage souhaité du véhicule.

4. Dispositif de commande de la force d'entraînement pour un véhicule automobile selon la revendication 3, **caractérisé en ce que** le modèle de variation souhaité de la force d'entraînement est classé selon des conditions prédéterminées comprenant au moins la variable de manipulation (Acc) de l'accélérateur et la vitesse du véhicule (V).

5. Dispositif de commande de la force d'entraînement pour un véhicule automobile selon la revendication 1 ou 2, **caractérisé en ce que** dans la partie de calcul du modèle de variation souhaité de la force d'entraînement, une force d'entraînement est formulée en prenant en compte au moins un couple moteur, un rapport de transmission, un couple d'inertie résultant d'une variation du rapport de transmission, et un couple d'inertie résultant d'une variation de la vitesse du véhicule, et **en ce qu'**un modèle de variation de la force d'entraînement est défini à la fois en fonction d'un taux de variation de la force d'entraînement par rapport au temps (t) et d'une courbure de la force d'entraînement par rapport au temps (t), et **en ce que** les équations de mouvement de la force d'entraînement sont résolues de telle sorte que le modèle de variation de la force d'entraînement est identique au modèle de variation souhaité de la force d'entraînement qui fournit une performance d'accélération souhaitée et un comportement de roulage souhaité du véhicule.

6. Dispositif de commande de la force d'entraînement pour un véhicule automobile selon l'une au moins des revendications 1 à 5, **caractérisé en ce que** la partie de réalisation du couple moteur souhaité comprend:

(1) une partie de calcul de la quantité d'air d'admission souhaitée qui calcule une quantité d'air d'admission souhaitée en se basant sur un couple moteur souhaité correspondant soit à la valeur souhaitée du couple moteur en régime permanent soit à la valeur souhaitée du couple moteur en régime transitoire;
(2) une partie de calcul de l'ouverture souhaitée du papillon des gaz qui calcule une ouverture du papillon des gaz souhaitée d'un papillon des gaz en se basant sur la quantité d'air d'admission souhaitée; et
(3) une partie de commande de l'actionneur du papillon des gaz qui règle le papillon des gaz sur l'ouverture du papillon des gaz souhaitée.

7. Dispositif de commande de la force d'entraînement pour un véhicule automobile selon l'une au moins des revendications 1 à 6, **caractérisé en ce que** la transmission comprend une transmission automatique à variation continue dont le rapport de transmission peut varier en continu, et dans lequel la partie de réalisation du rapport de transmission souhaité comprend:

(1) une partie de calcul du rapport de transmission réel qui calcule un rapport de transmission réel comme un rapport d'une vitesse d'entrée de la transmission à une vitesse de sortie de la transmission; et
(2) une partie de commande de l'actionneur du rapport de transmission qui règle le rapport de transmission réel sur un rapport de transmission souhaité correspondant soit au rapport de transmission souhaité en régime permanent soit au rapport de transmission souhaité en régime transitoire, de telle sorte que le rapport de transmission réel se rapproche du rapport de transmission souhaité.

**8.** Dispositif de commande de la force d'entraînement pour un véhicule automobile selon la revendication 5, **caractérisé en ce qu'**une des équations de mouvement de la force d'entraînement est définie de la manière suivante:

$$Td = Gf \cdot Gp \cdot Te - Gf^2 \cdot Gp \cdot J1 \cdot \omega_w \cdot (dGp/dt)$$
$$- (Gf^2 \cdot Gp^2 \cdot J1 + Gf^2 \cdot J2 + J3) \cdot (d\omega_w/dt)$$

où J1 désigne un moment d'inertie du moteur et d'un arbre d'entrée de la transmission, Te désigne le couple moteur, J2 désigne un moment d'inertie d'un arbre de sortie de la transmission entre un côté de sortie de la transmission et un côté d'entrée d'un engrenage final, Gp désigne le rapport de transmission, J3 désigne un moment d'inertie d'un arbre d'essieu entre l'engrenage final et une roue motrice, Gf désigne un rapport de réduction de l'engrenage final, $\omega_w$ désigne une vitesse angulaire de l'arbre d'essieu, et Td désigne un couple d'entraînement, et où un premier terme Gf·Gp·Te correspond au couple d'entraînement produit par le couple moteur, un deuxième terme $Gf^2 \cdot Gp \cdot J1 \cdot \omega_w \cdot (dGp/dt)$ correspond au couple d'inertie résultant de la variation du rapport de transmission, et un troisième terme $(Gf^2 \cdot Gp^2 \cdot J1 + Gf^2 \cdot J2 + J3) \cdot (d\omega_w/dt)$ correspond au couple d'inertie résultant de la variation de la vitesse du véhicule.

**9.** Dispositif de commande de la force d'entraînement pour un véhicule automobile selon la revendication 5, **caractérisé en ce qu'**une des équations de mouvement de la force d'entraînement est définie de la manière suivante:

$$Td = Gf \cdot Gp \cdot Te - Gf^2 \cdot Gp \cdot J1 \cdot \omega_w \cdot (dGp/dt)$$

où J1 désigne un moment d'inertie du moteur et d'un arbre d'entrée de la transmission, Te désigne le couple moteur, Gp désigne le rapport de transmission, Gf désigne un rapport de réduction d'un engrenage final, $\omega_w$ désigne une vitesse angulaire d'un arbre d'essieu, et Td désigne un couple d'entraînement, et où un premier terme Gf·Gp·Te correspond au couple d'entraînement produit par le couple moteur, et un second terme $Gf^2 \cdot Gp \cdot J1 \cdot \omega_w \cdot (dGp/dt)$ correspond au couple d'inertie résultant de la variation du rapport de transmission.

**10.** Dispositif de commande de la force d'entraînement pour un véhicule automobile selon la revendication 9, **caractérisé en ce que** la valeur souhaitée du couple moteur en régime transitoire et le rapport de transmission souhaité en régime transitoire sont obtenus en résolvant les deux équations différentielles suivantes de manière à faire correspondre un taux de variation dans le temps d'une force d'entraînement requise classée selon des conditions prédéterminées comprenant au moins la variable de manipulation (Acc) de l'accélérateur et la vitesse du véhicule (V) et une courbure de la force d'entraînement requise, la première des deux équations différentielles correspondant à une équation différentielle Td' du premier ordre pour l'équation de mouvement $Td = Gf \cdot Gp \cdot Te - Gf^2 \cdot Gp \cdot J1 \cdot \omega w \cdot (dGp/dt)$ et la seconde correspondant à une équation différentielle Td'' du second ordre pour l'équation de mouvement $Td = Gf \cdot Gp \cdot Te - Gf^2 \cdot Gp \cdot J1 \cdot \omega_w \cdot (dGp/dt)$, et le taux de variation dans le temps de la force d'entraînement requise étant lié à l'équation différentielle du premier ordre dTd/dt (=Td'), la courbure de la force d'entraînement requise étant liée à la fois à l'équation différentielle du premier ordre dTd/dt (=Td') et à l'équation différentielle du second ordre $d^2Td/dt^2$ (=Td''), et la courbure étant représentée comme $Td''/\{1+(Td')^2\}^{3/2}$ :

$$dTd/dt = Gf \cdot Gp \cdot (dTe/dt) + Gf \cdot Te \cdot (dGp/dt)$$
$$- J1 \cdot Gf^2 \cdot \omega_w \cdot \{Gp \cdot d^2Gp/dt^2 + (dGp/dt)^2\}$$

$$d^2Td/dt^2 = Gf \cdot \{Gp \cdot (d^2Te/dt^2) + 2(dTe/dt) \cdot (dGp/dt) + Te \cdot (dGp/dt)^2\}$$
$$-J1 \cdot Gf \cdot \omega_w \cdot \{Gp \cdot d^3Gp/dt^3 + 3 \cdot (dGp/dt) \cdot (d^2Gp/dt^2)\}.$$

# FIG.1

Th/V OPENING SIG.

FUEL INJECTION AMOUNT SIG.

IGNITION TIMING SIG.

LOCK-UP SIG.

TRANSMISSION RATIO SIG.

9e OUTPUT INTERFACE

9b CPU

9a INPUT INTERFACE

9

ROM 9d

RAM 9c

Ne

Qa

Tw

V

Acc

CRANK ANGLE SENSOR 10

AIR-FLOW METER 11

ENGINE TEMP. SENSOR 12

VEHICLE SPEED SENSOR 13

ACC SENSOR 14

ENGINE 1

CVT 2

BRAKE 3

4

5

6

7

8

EP 1 188 602 B1

EP 1 188 602 B1

# FIG.2

```
┌─────────────────────────────────────┐
│  STEADY-STATE DESIRED VALUES         │
│  ARITHMETIC-CALCULATION ROUTINE      │
└─────────────────────────────────────┘
                  │
                  ▼
┌─────────────────────────────────────┐  S30
│   CALCULATE DESIRED DRIVING FORCE    │
└─────────────────────────────────────┘
                  │
                  ▼
┌─────────────────────────────────────┐  S31
│      CALCULATE STEADY-STATE          │
│      DESIRED ENGINE TORQUE           │
└─────────────────────────────────────┘
                  │
                  ▼
┌─────────────────────────────────────┐  S32
│      CALCULATE STEADY-STATE          │
│    DESIRED TRANSMISSION RATIO        │
└─────────────────────────────────────┘
                  │
                  ▼
            ┌───────────┐
            │  RETURN   │
            └───────────┘
```

# FIG.3

DESIRED DRIVING FORCE (vertical axis)

ACCELERATOR MANIPULATED VARIABLE Acc

VEHICLE SPEED V

# FIG.4

ACCELERATOR
MANIPULATED
VARIABLE Acc

DESIRED TRANSMISSION
INPUT SPEED

VEHICLE SPEED V

# FIG.5

TRANSIENT-STATE DESIRED VALUES
ARITHMETIC-CALCULATION ROUTINE

CALCULATE DESIRED DRIVING-FORCE
CHANGE PATTERN — S60

CALCULATE TRANSIENT-STATE
DESIRED ENGINE TORQUE — S61

CALCULATE TRANSIENT-STATE
DESIRED TRANSMISSION RATIO — S62

RETURN

# FIG.6A

ACCELERATOR
MANIPULATED
VARIABLE Acc

# FIG.6B

DESIRED
DRIVING FORCE

- d(t4)
- c(t3)
- b(t2) — (3) MAXIMUM CHANGE PORTION c(t)
- a(t1) — (2) INITIAL RESPONSE PORTION b(t)
- (4) PEAK PORTION d(t)
- (1) LEADING EDGE PORTION a(t)

t0  t1  t2 t3 t4          TIME

# FIG.7

| | | ACCELERATOR MANIPULATED VARIABLE Acc [deg] | | |
|---|---|---|---|---|
| | | 10 | 20 | . . . |
| INITIAL VEHICLE SPEED [km/h] | 0 | (1)Td(t)=a(t) (2)Td(t)=b(t) (3)Td(t)=c(t) (4)Td(t)=d(t) | (1)Td(t)=f(t) (2)Td(t)=g(t) (3)Td(t)=h(t) (4)Td(t)=j(t) | . . . |
| | 20 | . . . | . . . | . . . |
| | . . . | | | |

# FIG.8

ENGINE

CVT

FINAL

TIRE

# FIG.9

```
┌─────────────────────────────────────────┐
(  ENGINE TORQUE CONTROL ROUTINE  )
└─────────────────────────────────────────┘
                    │
                    ▼
┌─────────────────────────────────────────┐   ⟋S110
│    CALCULATE DESIRED ENGINE TORQUE      │
└─────────────────────────────────────────┘
                    │
                    ▼
┌─────────────────────────────────────────┐   ⟋S111
│              CALCULATE                   │
│     DESIRED INTAKE-AIR QUANTITY          │
└─────────────────────────────────────────┘
                    │
                    ▼
┌─────────────────────────────────────────┐   ⟋S112
│              CALCULATE                   │
│     DESIRED THROTTLE OPENING             │
└─────────────────────────────────────────┘
                    │
                    ▼
              (  RETURN  )
```

# FIG.10

ACTUAL ENGINE SPEED

DESIRED INTAKE-AIR QUANTITY

DESIRED ENGINE TORQUE

# FIG.11

THROTTLE OPENING

DESIRED INTAKE-AIR QUANTITY

ACTUAL ENGINE SPEED

23

# FIG.12

# FIG.13

TRANSMISSION RATIO

ENGINE TORQUE

DRIVING FORCE

0

TIME (sec)

# FIG.14

| | | ACCELERATOR MANIPULATED VARIABLE Acc [deg] | | |
|---|---|---|---|---|
| | | 10 | 20 | . . . |
| INITIAL VEHICLE SPEED [km/h] | 0 | (1)$\Delta$Te$\leqq$a, $\Delta$Gp$\leqq$b<br>(2)$\Delta$Te$\leqq$c, $\Delta$Gp$\leqq$d<br>(3) ...<br>(4) ... | . . . | . . . |
| | 20 | . . . | . . . | . . . |
| | . . . | | | |